(19) Europäisches Patentamt
European Patent Office
Office européen des brevets

(11) EP 0 867 958 A1

(12) **EUROPEAN PATENT APPLICATION**

(43) Date of publication:
**30.09.1998 Bulletin 1998/40**

(51) Int. Cl.$^6$: **H01M 4/48**, H01M 10/40

(21) Application number: **98105306.9**

(22) Date of filing: **24.03.1998**

(84) Designated Contracting States:
**AT BE CH DE DK ES FI FR GB GR IE IT LI LU MC NL PT SE**
Designated Extension States:
**AL LT LV MK RO SI**

(30) Priority: **25.03.1997 US 824231**

(71) Applicant:
**DOW CORNING CORPORATION**
**Midland, Michigan 48686-0994 (US)**

(72) Inventors:
- **Dahn, Jeffrey Raymond**
  **Hubley, Nova Scotia BH3 3J5 (CA)**
- **Wilson, Alf M.**
  **Vancouver, British Columbia V5R 4G5 (CA)**
- **Xing, Weibing**
  **Halifax, Nova Scotia B3H 3T6 (CA)**
- **Zank, Gregg Alan**
  **Tokyo 151 (JP)**
- **Eguchi, Katsuya**
  **Minanmiashigara City, Kanagawa 258-01 (JP)**

(74) Representative:
**Spott, Gottfried, Dr. et al**
**Patentanwälte**
**Spott, Weinmiller & Partner**
**Sendlinger-Tor-Platz 11**
**80336 München (DE)**

(54) **Method for forming a SiOC ceramic electrode material and rechargeable lithium ion battery containing same as an anode**

(57) This invention pertains to a method for producing electrode materials for lithium ion batteries comprising pyrolyzing a composition comprising a silicon-containing preceramic polymer to produce a ceramic composition comprising a siliconoxycarbide (SiOC); treating the ceramic composition with a strong acid or a strong base; and thereafter introducing lithium ions into the ceramic material to form an electrode material. Treatment of the ceramic composition reduces the levels of Si and O and increases the surface area and open porosity of the ceramic thus making the ceramic more useful as an electrode material.

EP 0 867 958 A1

## Description

The invention pertains to a method for producing ceramic materials useful in forming electrodes for rechargeable lithium ion batteries and the electrodes formed thereby. These electrodes can be used to form batteries with high capacities.

Lithium ion batteries are known in the art and are widely used as electric sources for lap top computers, cellular phones and camcorders. They are advantageous in that they can provide high voltage, high energy density, small self-discharge and excellent long-term reliability.

Rechargeable lithium ion batteries have a simple mechanism. During charge, lithium ions are extracted from the cathode and inserted as lithium into the anode. On discharge, the reverse process occurs. The electrodes used in these batteries are very important and can have dramatic effects on the batteries performance

Positive electrodes known in the art for use in these rechargeable lithium ion batteries include metal chalcogenides, metal oxides and conductive polymers. Negative electrodes (anodes) known in the art for use in rechargeable lithium batteries include compounds in which the lithium ion is incorporated into a crystal structure of inorganic materials such as $WO_2$ and $Fe_20_3$ and carbonaceous materials, such as graphite and conductive polymers.

Properties which are desirable in electrode materials include 1) chemical inertness towards other battery components such as lithium ions, electrolyte salts and electrolyte medium; 2) the ability to store high quantities of lithium; 3) the ability to reversibly store or bind lithium; 4) lithium storage that minimizes formation of metallic lithium clusters or agglomerates and, thereby minimizes safety concerns; and 5) a high density which allows for volume efficiency.

The electrodes to date, however, have not maximized these properties. For instance, while lithium metal provides the best electrode potential, large batteries constructed therewith have poor safety behavior. Likewise, while lithium alloys have reasonable electrode potentials and safety profiles, they often crack and fragment with constant cycling of the battery.

The most desirable anode materials to date have been carbonaceous compounds such as graphite. Graphite is chemically inert, can bind reasonable amounts of lithium (cells with capacities of 330 mAh/g of anode) with little being irreversible (10%) and it has a high density (2.2 g/cm$^3$, although in the electrode the density is 1.2 g/cm$^3$). Cells with larger capacities, however, are often desired.

It has recently been suggested that the addition of boron, phosphorous or silicon to carbonaceous anodes can increase the capacity of the resultant batteries. Such batteries, however, have not achieved optimal results.

For instance, Tahara et al. in European publication 0,582,173 teach the use of a silicon oxide or a silicate as the negative electrode in a lithium ion battery. Similarly, European publication 0,685,896 teaches the use of SiC containing materials as anodes in lithium ion batteries. These references, however, do not teach the methods or materials described and claimed herein.

From this previous work on silicon oxycarbide (SiOC) materials it was learned that better battery anode performance came from ceramic materials with relatively high levels of open porosity and relatively low levels of oxygen. From a polymer precursor perspective low oxygen/high carbon ceramics with high surface areas can be expensive compared to high oxygen systems. Thus, it would be desirable to have a method which could take the ceramics derived from the relatively inexpensive high oxygen precursors and convert them into the more desirable low oxygen ceramics.

It is an object of the instant invention to provide a method of treating siliconoxycarbide ceramics with a treating agent selected from a strong acid or a strong base wherein the treating agent can selectively solubilize and remove the silica like materials; thus, lowering the weight percents of Si and O relative to the C in these SiOC ceramics.

It is further an object of the instant invention to provide a method of treatment wherein after treatment with the treating agent, the ceramic materials have an increased surface area and increased porosity.

This invention pertains to a method for producing electrode materials for lithium ion batteries comprising pyrolyzing a composition comprising a silicon-containing preceramic polymer to produce a ceramic composition comprising a siliconoxycarbide (SiOC); treating the ceramic composition with a strong acid or a strong base; and thereafter introducing lithium ions into the ceramic material to form an electrode material. Treatment of the ceramic composition reduces the levels of Si and O and increases the surface area and open porosity of the ceramic thus making the ceramic more useful as an electrode material.

FIG. 1 is a graphical representation of Small Angle X-ray (SAX) data for treated and untreated siliconoxycarbide ceramics produced in Examples 1-8.

FIG. 2 is a graphical representation of the Silicon K-shell-edge from Examples 1, 6 and 8.

The present invention is based on the unexpected discovery that lithium ion batteries containing anodes of siliconoxycarbide (SiOC) derived from preceramic polymers can provide the batteries with highly desirable properties. The batteries can have large capacities (the electrodes have the ability to store large quantities of lithium) with low irreversible capacity (the lithium is reversibly stored). In addition, these anode materials are chemically inert towards the other battery components, they minimize the agglomeration of lithium and they have a high density.

The electrodes of the present invention are formed from SiOC ceramics that have been treated to reduce the Si and

O contents as well as increase the surface area and open porosity. The SiOC ceramics are derived from silicon-containing polymers including, but not limited to, polycarbosilanes, polysilazanes, polysilanes and polysiloxanes.

Polycarbosilanes useful herein are known in the art. Generally, these polycarbosilanes contain units of the type $(R^1R^2SiCH_2)$, $(R^1Si(CH_2)_{1.5})$ and/or $(R^1R^2R^3Si(CH_2)_{0.5})$ where each $R^1$, $R^2$ and $R^3$ is independently selected from hydrogen and hydrocarbons having 1-20 carbon atoms. The hydrocarbons can include alkyls such as methyl, ethyl, propyl and butyl; alkenyls such as vinyl and ally; and aryls such as phenyl. In addition, the hydrocarbon radicals can contain hetero atoms such as silicon, nitrogen or boron. The polycarbosilanes may also be substituted with various metal groups such as boron, aluminum, chromium and titanium. The substituted polycarbosilanes are also known in the art and can be manufactured by known methods.

The polysilazanes useful herein are also known in the art and generally contain units of the type $(R^1R^2SiNR^4)$, $(R^1Si(NR^4)_{1.5})$ and/or $(R^1R^2R^3Si(NR^4)_{0.5})$ and/or

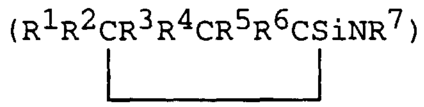

wherein $R^1$, $R^2$ and $R^3$ are described above and $R^4$, $R^5$, $R^6$ and $R^7$ are independently selected from hydrogen and hydrocarbons having 1-20 carbon atoms.

The polysilanes useful herein are known in the art and generally contain units of the formula $(R^1R^2R^3Si)$, $(R^1R^2Si)$ and $(R^3Si)$ wherein $R^1$, $R^2$ and $R^3$ are as described above. Examples of specific polysilane units are $(Me_2Si)$, (PhMeSi), (MeSi), (PhSi), (ViSi), (PhMeSi), (MeHSi), (MeViSi), $(Ph_2Si)$, $(Me_2Si)$, $(Me_3Si)$ and others. The polysilane may also be substituted with various metal groups (i.e., containing repeating metal-Si units). Examples of suitable metals include boron, aluminum, chromium and titanium.

The polysiloxanes useful herein are known in the art and are of the structure:

$$(R^1R^2R^3SiO_{0.5})_w(R^4R^5SiO)_x(R^6SiO_{1.5})_y(SiO_{4/2})_z$$

wherein $R^1$, $R^2$, $R^3$, $R^4$, $R^5$ and $R^6$ are as described above and w, x, y and z are mole fractions with w=0 to 0.8, x=0 to 0.9, y=0 to 0.9, z=0.3 to 0.9 and $w + x + y + z = 1$.

Examples of specific siloxane units include $(MeSiO_{1.5})$, $(PhSiO_{1.5})$, $(ViSiO_{1.5})$, $(HSiO_{1.5})$, (PhMeSiO), (MeHSiO), (PhViSiO), (MeViSiO), $(Ph_2SiO)$, $(Me_2SiO)$, $(Me_3SiO_{0.5})$, $(PHViSiO_{0.5})$, $(Ph2HSiO_{0.5})$ $(H2ViSiO_{0.5})$, $(Me2ViSiO_{0.5})$, $(SiO_{4/2})$ and others wherein Me is methyl, Ph is phenyl and Vi is vinyl.

It should be noted that the term "silicon-containing polymer" as used herein is intended to include copolymers or blends of the above silicon-containing polymers and other polymers which are also useful herein. For instance, copolymers of silicon-containing polymers and silalkylenes $(R_2Si(CH_2)_nSiR_2O)$ such as silethylene; silarylenes such as silphenylene $(R_2Si(C_6H_4)_nSiR_2O)$; silazanes $(R_2SiN)$, silanes $(R_2Si\text{-}SiR_2)$, organic polymers and others can be used herein. Moreover, blends of silicon-containing polymers and the above mentioned polymers are also useful herein.

The silicon-containing polymer should be capable of being converted to ceramic materials with a ceramic char yield greater than 20 weight percent, preferably greater than 30 weight percent, more preferably greater than 50 weight percent and most preferably greater than 70 weight percent.

The silicon-containing polymers should provide a char with at least an excess of carbon (e.g., >0.05 wt% based on the weight of the char). Although not wishing to be bound by theory, it is thought that the excess carbon forms a continuous network for the lithium ions. Larger excesses of carbon (e.g., >5 wt%) are preferred.

What is meant by "excess carbon" is the amount of free or excess carbon derived from the silicon-containing polymer (i.e., not bound to Si or O) during pyrolysis expressed as a weight percentage based on the weight of the char.

The amount of free carbon derived from the silicon-containing polymer is determined by pyrolysis of the polymer to an elevated temperature under an inert atmosphere until a stable ceramic char is obtained. A "stable ceramic char" is defined as the ceramic char produced at an elevated temperature (e.g., 700-1400°C.).

Both the ceramic yield and the silicon, oxygen, carbon and nitrogen content of the stable ceramic char are then determined. Using a composition rule of mixtures, the amount of excess carbon in the stable ceramic char can be calculated (the amount of "excess carbon" in the char is calculated by subtracting the theoretical amount of carbon bound to silicon (one mole carbon per mole silicon) from the total carbon present) . The amount of excess carbon thus calculated is normally expressed as a weight percent based on the weight of the char derived from the silicon-containing polymer.

Silicon-containing polymers which contain phenyl groups are preferred since they add to the free carbon in the ceramic chars. Silicon-containing polymers which contain vinyl groups are also preferred since vinyl groups attached to

silicon provide a mechanism whereby the polymer can be cured prior to pyrolysis. Silicon-containing polymers where the functionality on the silicon is almost exclusively methyl or hydrogen are generally not suitable when used alone for use in this invention as there is insufficient free carbon in the resulting ceramic char. However, silicon-containing polymers where the functionality on the silicon is almost exclusively methyl or hydrogen can be blended with organic polymers for use in this invention.

The silicon-containing polymer is optionally cured, by a variety of techniques well known in the art and is then pyrolyzed in an inert atmosphere and/or under vacuum to a temperature of 700°C. or more, preferably 800 to 1400°C.

Inert atmospheres are used during pyrolysis to prevent oxygen incorporation into the ceramic or loss of carbon through combustion. For purposes of this invention, an inert atmosphere includes inert gases, vacuum or both. Inert gases include, but are not limited to, argon, helium or nitrogen. Vacuum, when used, is typically in the range of 0.1-200 torr (13.3 to 26,600 Pa).

A reactive gas such as silane, methane, $H_2$, O or $NH_3$ may be introduced during pyrolysis to chemically change the composition of the ceramic from that derived by pyrolysis in an inert atmosphere.

Pyrolysis of the silicon-containing polymer may be performed in any conventional high temperature furnace equipped with a means to control the furnace atmosphere. Such furnaces are well known in the art and many are commercially available.

The temperature schedule for pyrolysis has been found to be important in the present invention. Generally, heating temperatures should be at a rate less than 50°C./minute and preferably less than 10°C./minute.

The resultant ceramics contain silicon, carbon, oxygen, nitrogen and/or hydrogen in a wide array of proportions, based on the composition of the silicon-containing polymer. Typically, the material will have a composition of $SiO_xC_y$ wherein x = 0 to 2 and 0 < y > 100. Although unaccounted for in this formula, hydrogen or nitrogen may also be present in small amounts (e.g. <5 wt%).

Following pyrolysis of the silicon-containing polymer to a ceramic, the ceramic is treated with a treating agent selected from a strong acid and a strong base. Treating agents useful herein include, but are not limited to, strong acids such as hydrofluoric acid (HF) and strong bases such as potassium hydroxide (KOH). Preferably, the treating agent is HF.

The ceramic is treated by contacting the ceramic with the treating agent. The treating agent is typically a liquid solution. However, the ceramic may be contacted with the treating agent in a gaseous state. When used as a liquid solution, the treating agent is typically at a concentration of 3 to 30 wt%, preferably from 15 to 25 wt%. There should be sufficient treating agent present in excess to the oxygen and silicon present in the starting ceramic.

Typically the ceramic is ground into a powder and mixed with the treating agent. The ceramic is brought into contact with the treating agent for a period of time to reduce the Si and O and increase the surface area of the ceramic. This typically takes from 5 minutes to 24 hours, preferably from 15 minutes to 4 hours. The treatment may be carried out at any temperature, preferably below the boiling point of the treating agent. Typically the treatment is carried out at room temperature and atmospheric pressure.

The treated ceramic is recovered from the treating agent by means known in the art such as filtration; washed to remove any residual treating agent and dried, for example, by mild heating in an oven.

By treating the ceramic with a treating agent, the ceramic composition ($SiO_xC_y$) and the microstructure are changed. By "microstructure", it is meant the amount of surface area, open porosity and composition at the surface of the SiOC particle. Additionally, the bulk and surface composition of the ceramic is selectively changed. It is theorized that the changes that result from the treatment of the ceramic have an impact on the reactivity towards reversible insertion of lithium.

It is often preferred to process the ceramic material into a powder form for use in the electrodes. This can be accomplished by techniques known in the art such as grinding, milling and spray drying.

If a ceramic powder is used, it is often mixed with variety of conductive agents, diluents or binders to assist in forming the desired shape electrode. For instance carbon black conductive diluent, N-methylpyrollidone, cyclohexanone, dibutylpthallate, acetone or polyvinylidene fluoride binder, polytetrafluorethylene dispersed in water as a binder or ethylene propylene diene terpolymer dissolved in cyclohexanone as a binder are within the scope of the invention.

After the electrode is shaped, lithium ions are incorporated into the electrode. This can occur prior to insertion of the electrode into the battery, for instance, by mixing the lithium in the powdered ceramic material. Preferably, however, the lithium ions are inserted after the electrode is inserted into the battery. At such time, the battery is merely "charged" by placing both the electrode of the invention and a counter electrode of, for instance, lithium transition metal oxide such as $LiCoO_2$, in a lithium ion conductive non-aqueous electrolyte and then applying a current in a direction which allows incorporation of the lithium into the electrode of the invention.

The electrodes of the present invention can be used in any battery configuration. The preferred battery of the present invention is the conventional spiral wound type in which a cathode and anode separated by a porous sheet are wound into a "jelly roll". The cathodes typically comprise known suitable cathode materials (e.g., as lithiated metal oxides) applied on the surface of aluminum foil. This is often accomplished by forming a slurry of the cathode material

and a binder and/or diluent and then depositing the slurry on the foil. The diluent is dried leaving a thin film of the cathode material on the foil.

Anodes are formed in the same manner as the cathode except that the ceramic of the present invention is used as the anode material and a copper foil is used in place of the aluminum foil.

As noted above, a porous sheet such as a polyolefin material is placed between the cathode and the anode and the composition is then rolled. This "jelly roll" is inserted into a conventional battery can and the can is sealed with a header and a gasket.

Before the can is sealed, an appropriate electrolyte is added to fill the pores in the porous sheet and in the electrode themselves and connections are made between the anode and cathode and the external terminals.

Those skilled in the art will understand that the type and amount of the battery components will be chosen based on component material properties and the desired performance and safety requirements of the battery. Also, the battery is generally electrically conditioned (recharged) during its manufacture.

Other configurations or components are possible. For instance, coin cells or a prismatic format are within the scope of the present invention.

When the ceramics produced herein are used as electrodes in lithium ion batteries, they provide the batteries with many desirable properties. For instance, the batteries can have large capacities with low irreversible capacity. In addition, these anode materials are chemically inert towards the other battery components, they minimize the agglomeration of lithium and they have a high density. Finally, the ceramics produced herein can be designed to have low hysteresis or a larger hysteresis. It is believed that the hysteresis of these materials may be valuable since it may reduce reaction rates between intercalated lithium and electrolyte under thermal abuse.

So that those skilled in the art can understand and appreciate the invention taught herein, the following examples are presented.

I. Battery Testing: Laboratory coin cell batteries were used to determine electrochemical characteristics. These were assembled using conventional 2325 hardware and with assembly taking place in an argon filled glovebox. For purposes of analysis, the experimental electrode materials were used opposite a lithium metal electrode in these coin cell batteries. A stainless steel cap and a special oxidation resistant case comprised the container and also serve as negative and positive terminals respectively. A gasket was used as a seal and also served to separate the two terminals. Mechanical pressure was applied to the stack comprising the lithium electrode, separator and the experimental electrode by means of a mild steel disk spring and a stainless disk. The disk spring was selected such that a pressure of 15 bar ($1.5x10^6$ Pa) was applied following closure of the battery. A 125 μm thick foil was used as the lithium electrode. Celgard® 2502 microporous polypropylene film was used as the separator. The electrolyte was a solution of 1M $LiPF_6$ salt dissolved in a solvent mixture of ethylene carbonate and diethyl carbonate in a volume ratio of 30/70.

Electrodes of experimental material were made using a mixture of the powdered material plus Super S (trademark of Ensagri) carbon black conductive diluent and polyvinylidene fluoride (PVDF) binder (in amounts of 5 and 10 wt% respectively to that of the sample) uniformly coated on a thin copper foil. The powdered sample and the carbon black were initially added to a solution of 20% PVDF in N-methylpyrollidone (NMP) to form a slurry with additional NMP added to reach a smooth viscosity. The slurry was then spread on pieces of copper foil using a small spreader and the NMP evaporated at 100°C. in air. Once the sample electrode was dried, it was compressed between flat plates at 25 bar ($2.5x10^6$ Pa) pressure. Electrode squares, 1.44 $cm^2$, were then cut from the larger electrode. These electrodes were then weighed and the weight of the foil, the PVDF and the carbon black were subtracted to obtain the active electrode mass.

After construction, the coin cell batteries were removed from the glove box, themostated at 30±1°C. and then charged and discharged using constant current cycles with a ±1% current stability. Data was logged whenever the cell voltage changed by more than 0.005 V. Currents were adjusted based on the amounts of active material and the desired test conditions. Normally currents of 18.5 mAh/g (66.6 C/g) of active material were used.

Cells were normally discharged to 0.0 V and then charged to 3.0 V. This was the 'first cycle'. The cells were similarly cycled two more times in succession. The capacity of the first discharge was designated $Qd_1$, the capacity of the first charge by $Qc_1$. The reversible capacity was taken here to be $Q_{rev}=(Qc_1 + Qd_2)/2$. The irreversible capacity was taken to be $Q_{irr}= Qd_1 - Qc_1$.

II. Materials. All organosiloxane materials were obtained from Dow Coming Corporation as intermediates.

Polymer pyrolysis was carried out in a Lindberg Model 54434 or similar tube furnace equipped with Eurotherm temperature controllers. In a typical pyrolysis, a sample was weighed out (approximately 6.0g) and placed in an alumina boat and loaded into the furnace. The furnace was then purged with argon at a rate sufficient to achieve one turnover of the furnace atmosphere every 3 min. After purging 45 to 60 minutes the flow was reduced to allow for a turnover every 6 min. and the temperature raised to a final temperature of 1000°C. and held 60 minutes. The ceramic sample was then reweighed and ground for testing and analysis.

III. Analysis. The x-ray powder diffraction was carried out on a Siemens D5000 equipped with a Cu target X-ray tube and a diffraction beam monochromator. Samples were prepared by filling a 25mm x 16mm x 2mm deep well in a stainless steel plate with the powdered sample followed by smoothing of the surface. The solid sample was always ground to a fine powder of -100 mesh and smaller without any grit feeling by using an alumina grinder to minimize the contamination from grinding. Scans were made at 1 degree 2-theta per minute from 6 to 90 2-theta with the x-ray tube operated at 40kv & 30mA.

Small angle X-ray scattering was measured by transmission mode operation of a Siemens D5000 diffractometer. Fifty to one hundred micron thick powdered samples were held in a rectangular frame with kapton windows. Data were collected between the scattering angle of 0.3 and 15°.

Surface area of the materials was measured by the Brunauer-Emmett-Teller (BET) method. Single point measurements were made using Micrometrics Flowsorb surface area analyzer. A mixture of $N_2$ in He (30:70 mole%) was used. The samples were degassed in this gas mixture at 140°C. for 15 minutes. The final results were taken from the desorption data.

X-ray absorption measurements were performed at the Canadian Synchroton Radiation Facility Double-Crystal-Monochromator beam-line, located at the Synchrotron Radiation Facility in Stoughton, Wisconsin, USA. Samples were placed under a vacuum not exceeding $10^{-6}$ torr ($1.33x10^{-4}$ torr) and exposed to monochromatic synchtron radiation. The electrons excited from the material were collected in a loop of wire biased at 250 V located in front of the sample. To maintain electrical neutrality, a current was supplied to the sample.

EXAMPLES 1-8

Leaching with Dilute HF. The samples were prepared by washing a sample of the powdered ceramic in a 20 wt% HF solution. The powders were immersed in the aqueous solution such that the HF was present in excess to the oxygen and silicon present in the initial ceramic. After stirring the resulting slurry for a specific period of time, the sample was recovered by filtration and washed with distilled water to remove any HF. The ceramic was then dried at 150°C. in an air circulating oven prior to analysis. The surface area by BET and elemental compositions are given in Table I.

The increase in surface area with the treatment was accompanied by an increase in porosity. This was evident from the fits to the SAX data in Figure 1. It was surprising that the pore size increase at ~10Å (Figure 1) was most prevelant.

The SiK-edge is shown in Figure 2 for the comparative example (untreated ceramic) and Examples 1, 6 and 8. For comparison the bottom panel showed the SiK-edge for $SiO_2$ and SiC. It was obvious from this figure as well as the accompanying data that the population of Si-C bonds was growing relative to the Si-O bonds. Hence, we were changing the composition of the ceramic by removing the silica like species.

The battery testing results are shown in Table II.

Table I

| Result from HF treatment of SiOC ceramic | | | | | |
|---|---|---|---|---|---|
| Example # | Wash Time (h) | C (wt%) | Si (wt%) | O (wt%) | Surface Area ($m^2$/g) |
| Comp. Ex. | 0 | 28.7 | 38.3 | 26.8 | 0.25 |
| 1 | 0.25 | 24.8 | 35.5 | 39.7 | 17.7 |
| 2 | 0.5 | 27.0 | 34.3 | 38.7 | 25.7 |
| 3 | 1.0 | 28.3 | 35.8 | 35.9 | 37.1 |
| 4 | 2.0 | 30.1 | 34.2 | 35.7 | 44.4 |
| 5 | 4.0 | 30.8 | 34.8 | 34.4 | 53.8 |
| 6 | 8.0 | 31.2 | 32.1 | 38.7 | 55.6 |
| 7 | 16.0 | 31.4 | 31.6 | 37.0 | 54.4 |
| 8 | 24.0 | 33.4 | 33.6 | 33.1 | 54.1 |

Table II

| Battery testing results | | | |
|---|---|---|---|
| Example # | Reversible Capacity (mAh/g) [C/g] | Irreversible Capacity (mAh/g) [C/g] | Average Charge Voltage |
| Comp. Ex. | 890 [3204] | 360 [1296] | 1.06 |
| 1 | 840 [3024] | 420 [1512] | 1.02 |
| 2 | 900 [3240] | 360 [1296] | 1.03 |
| 3 | 840 [3024] | 400 [1440] | 1.05 |
| 4 | 760 [2736] | 390 [1404] | 1.12 |
| 5 | 860 [3096] | 390 [1404] | 1.00 |

## Claims

**1.** A method of forming an electrode material for a lithium ion battery comprising:

(A) pyrolyzing a composition comprising a silicon-containing preceramic polymer to yield a ceramic composition comprising Si, O and C,
(B) treating the SiOC composition with a treating agent selected from a strong acid or a strong base wherein said treatment reduces the levels of Si and O and increases the surface area and open porosity, and
(C) introducing lithium ions into the treated ceramic material to form an electrode material.

**2.** The method as claimed in claim 1 wherein the silicon-containing preceramic polymer is selected from polysiloxane, polysilazane, polysilane and polycarbosilane.

**3.** The method as claimed in claim 1 wherein the composition comprising the silicon-containing preceramic polymer is pyrolyzed by heating at a rate of 10°C./minute to a temperature in the range of 700 to 1400°C.

**4.** The method as claimed in claim 1 wherein the silicon-containing preceramic polymer has a char yield greater than 50 wt%.

**5.** The method as claimed in claim 1 wherein the silicon-containing preceramic polymer is a copolymer comprising a silicon-containing polymer and at least one unit selected from silalkylenes, silarylenes, silazanes, silanes and organic polymers.

**6.** The method as claimed in claim 1 wherein the treating agent is a strong acid and is HF.

**7.** The method as claimed in claim 1 wherein the treating agent is a strong base and is KOH.

**8.** The method as claimed in claim 1 wherein the ceramic material produced in step (B) is formed into a powder, the powder blended with a binder and a diluent to form a mixture and the mixture is then formed into the desired shape of an electrode before lithium ions are introduced.

**9.** A rechargeable lithium ion battery where an anode is obtainable by the method of claim 1.

Fig. 1

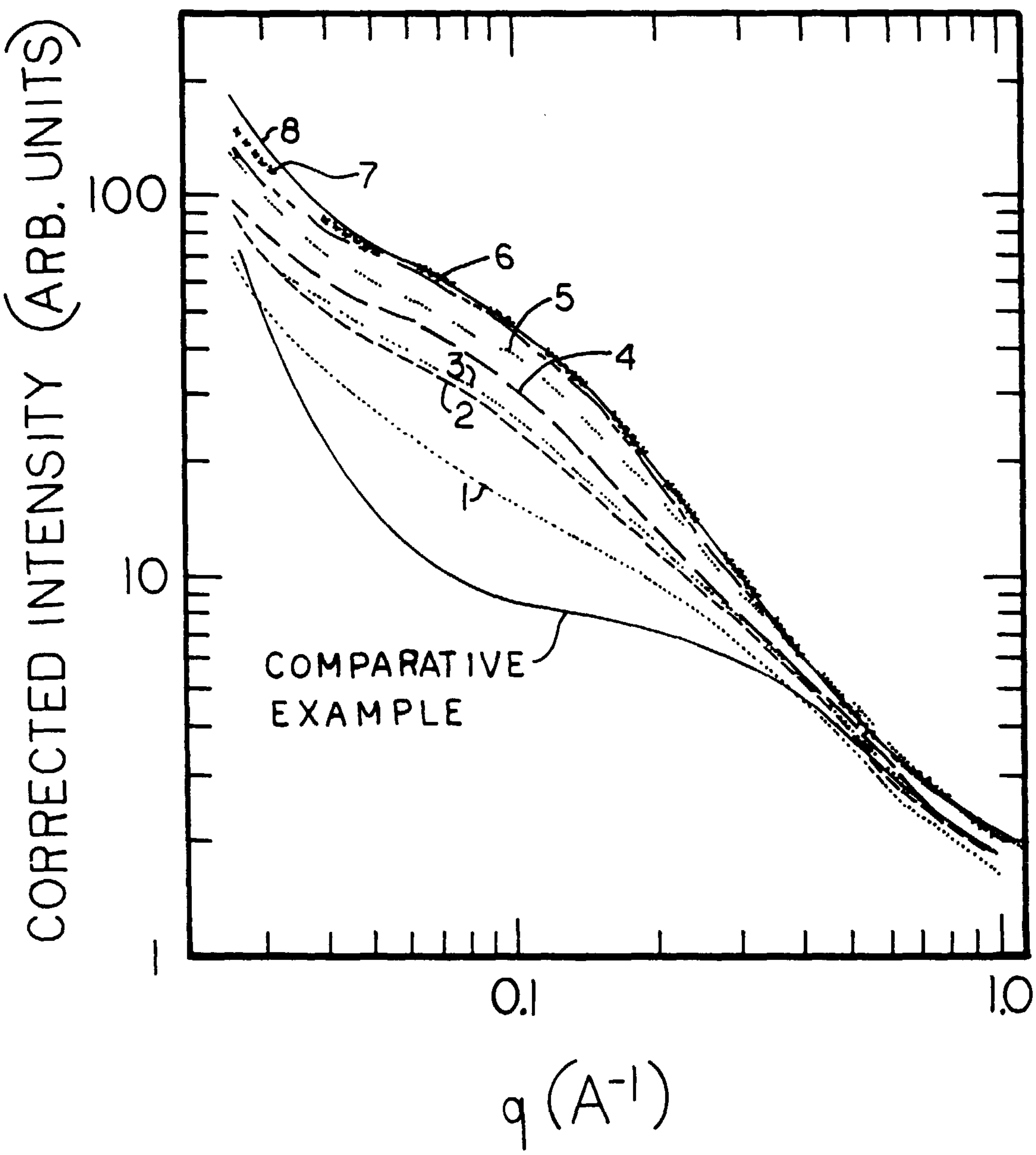
CORRECTED INTENSITY (ARB. UNITS)
100
10
1
0.1
1.0
q (A-1)
8
7
6
5
4
3
2
1
COMPARATIVE EXAMPLE

Fig. 2

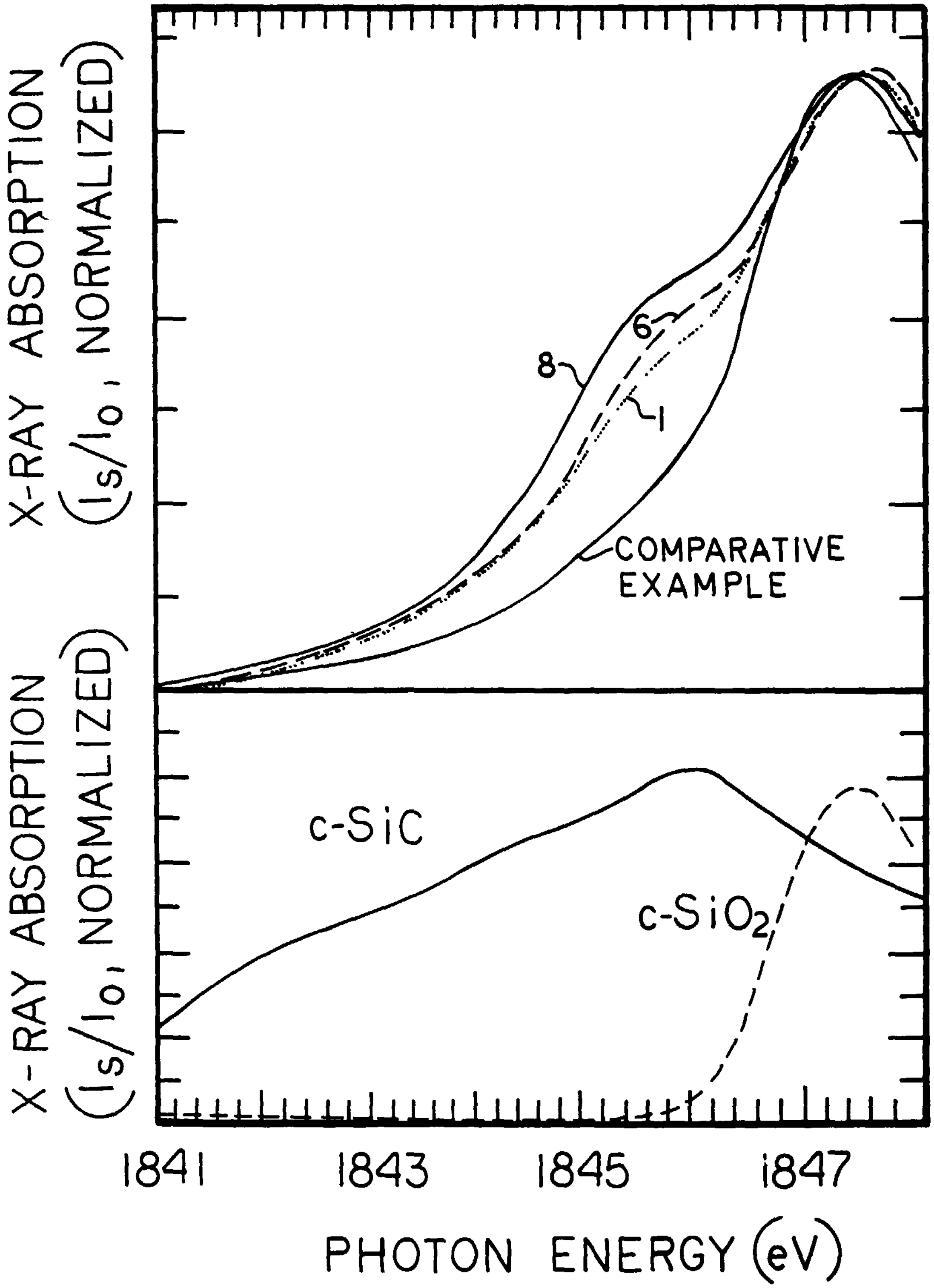
X-RAY ABSORPTION (Is/Io, NORMALIZED)
8
6
1
COMPARATIVE EXAMPLE
X-RAY ABSORPTION (Is/Io, NORMALIZED)
c-SiC
c-SiO2
1841
1843
1845
1847
PHOTON ENERGY (eV)

European Patent Office

# EUROPEAN SEARCH REPORT

Application Number
EP 98 10 5306

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WEIBING X ET AL: "Pyrolysed pitch-polysilane blends for use as anode materials in lithium ion batteries" SOLID STATE IONICS, vol. 93, no. 3, January 1997, page 239-244 XP004056293 --- | 1-9 | H01M4/48 H01M10/40 |
| A | WILSON A M ET AL: "LITHIUM INSERTION IN PYROLYZED SILOXANE POLYMERS" SOLID STATE IONICS, vol. 74, no. 3/04, 15 December 1994, pages 249-254, XP002042128 --- | 1-9 | |
| A | WILSON A M ET AL: "LITHIUM INSERTION IN CARBONS CONTAINING NANODISPERSED SILICON" JOURNAL OF THE ELECTROCHEMICAL SOCIETY, vol. 142, no. 2, 1 February 1995, pages 326-332, XP002042127 --- | 1-9 | |
| A | WILSON A M ET AL: "CARBONACEOUS MATERIALS CONTAINING SILICON AS ANODES FOR LITHIUM -IONCELLS" MATERIALS RESEARCH SOCIETY SYMPOSIUM PROCEEDINGS, vol. 393, 1995, pages 305-313, XP002042137 --- | 1-9 | TECHNICAL FIELDS SEARCHED (Int.Cl.6) |
| A | GB 2 298 516 A (MOLI ENERGY) 4 September 1996 * the whole document * --- | | H01M |
| A | US 5 139 901 A (KAWAGUCHI MASAYUKI ET AL) 18 August 1992 * the whole document * ----- | | |

The present search report has been drawn up for all claims

| Place of search | Date of completion of the search | Examiner |
|---|---|---|
| MUNICH | 16 June 1998 | Engl, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)